# EUROPEAN PATENT SPECIFICATION

(11) **EP 3 623 093 B1**
(45) Date of publication and mention of the grant of the patent: **17.01.2024**
(21) Application number: 18802299.0
(22) Date of filing: 11.05.2018
(51) Int. Cl.: B23B 31/08, B23B 31/20, B23G 1/46

(54) **TOOL HOLDER**
WERKZEUGHALTER
PORTE-OUTIL

(30) Priority: 17.05.2017 JP 2017098335
(43) Date of publication of application: 18.03.2020
(73) Proprietor: NT Tool Corporation, Takahama City Aichi 444-1386 (JP)
(72) Inventor: ISHIKAWA Hitoshi, Takahama-City Aichi 444-1386 (JP)
(74) Representative: Kramer Barske Schmidtchen Patentanwälte PartG mbB
(86) International application number: PCT/JP2018/018423
(87) International publication number: WO 2018/212107

(56) References cited:
- EP-A1- 1 177 847
- EP-A1- 1 839 786
- EP-A1- 1 839 786
- EP-A1- 2 106 869
- JP-A- 2002 046 020
- JP-A- 2018 024 065
- US-A1- 2008 185 793
- US-A1- 2011 170 964
- US-A1- 2015 030 407
- US-A1- 2016 193 666
- US-A1- 2017 056 979
- US-B2- 6 640 911

## Description

### TECHNICAL FIELD

The present invention relates to a tool holder for holding a tool, and more particularly a tool holder capable of suitably holding a tap which is used for tapping operation.

### BACKGROUND ART

When performing a tapping operation for forming an internal thread in a workpiece, a tap is gripped by a tool gripping part of a tool holder (referred to as a "tap holder") which is mounted to a spindle of a machine tool. In this case, during tapping operation using the tap, excessive stress may be applied to a cutting edge of the tap, for example, by cutting resistance. If excessive stress is applied to the cutting edge of the tap, machining accuracy of the internal thread may be lowered.

Therefore, a tool holder is provided which has a stress absorbing mechanism for absorbing stress applied to a cutting edge of a tap. Such a tool holder having the stress absorbing mechanism is disclosed, for example, in patent documents 1 and 2. The tool holder disclosed in the patent document 1 has a first stress absorbing mechanism which absorbs stress applied to the tool gripping part in one direction of an axial direction and a second stress absorbing mechanism which absorbs stress applied to the tool gripping part in the other direction of the axial direction. Further, the tool holder disclosed in the patent document 2 has a single stress absorbing mechanism configured to absorb stress applied to the tool gripping part in one direction and the other direction of the axial direction.

### PATENT DOCUMENTS

Patent Document 1: Japanese Unexamined Patent Application Publication No. 2012-11474
Patent Document 2: Japanese Unexamined Patent Application Publication No. 2002-46020

Further, a tool holder with built-in cavities is known from US 2016/0193666 A1 and a draw-in collet chuck is known from EP 1 839 786 A1.

### SUMMARY OF THE INVENTION

### PROBLEMS TO BE SOLVED BY THE INVENTION

The tool holder disclosed in the patent document 1 is configured such that stress applied to the tool gripping part in one direction of the axial direction is absorbed by the first stress absorbing mechanism and stress applied thereto in the other direction of the axial direction is absorbed by the second stress absorbing mechanism. Further, the tool holder disclosed in the patent document 2 is configured such that stress applied to the tool gripping part in one direction and the other direction of the axial direction are absorbed by the single stress absorbing mechanism. Therefore, the structure is complicated.

Accordingly, it is an object of the present invention to provide a tool holder capable of absorbing stress applied to a tool with a simple structure.

### MEANS FOR SOLVING THE PROBLEMS

The above-mentioned object is solved with a tool holder having the features of claim 1. The tool holder of the present invention comprises a body having a body inner peripheral surface and a body outer peripheral surface. The body has a shank part on a rear end side and a tool gripping part on a front end side. The shank part is gripped by a gripping mechanism provided on a spindle of a machine tool. Typically, a part of the body outer peripheral surface which corresponds to the shank part is gripped by the gripping mechanism of the machine tool. The tool gripping part is configured to grip a tool. Typically, an outer peripheral surface of a tool shank part of the tool is inserted into a part (tool insertion space) of a body inside space which is defined by a part of the body inner peripheral surface which corresponds to the tool gripping part and is gripped by this part of the body inner peripheral surface.

The body has a first elastic part between the shank part and the tool gripping part. The first elastic part has a plurality of first voids and a plurality of second voids which extend between the body inner peripheral surface (part of the body inner peripheral surface which corresponds to the first elastic part) and the body outer peripheral surface (part of the body outer peripheral surface which corresponds to the first elastic part), and is configured to be elastically deformable along an axial direction and a circumferential direction. The structure of "being elastically deformable along the axial direction and the circumferential direction" refers to a structure of being elastically deformable along the axial direction and the circumferential direction so as to absorb stress applied to the tool gripping part in the axial direction and the circumferential direction during operation using the tool.

Within the scope of the appended claims, various numbers, shapes (widths, sections, lengths) and arrangement positions of the first voids and the second voids may be selected within a range in which the first elastic part can elastically deform along the axial direction and the circumferential direction.

In the present invention, stress applied to the tool gripping part during operation is absorbed with a simple structure.

The plurality of first voids and the plurality of second voids are grouped into a plurality of void groups which include the first voids and the second voids. The numbers of the first voids and the second voids included in the void group are preferably set to be equal to each other, but may be different from each other. The void groups are arranged to at least partially overlap with at least one of the other void groups in the circumferential direction and the axial direction. The void groups are arranged along the circumferential direction

Thus, the first elastic part can be more easily formed.

The plurality of void groups include first void groups and second void groups. The first void groups and the second void groups may include the same number of the first voids and the second voids and are different in arrangement shape of the first voids and the second voids. The first void groups and the second void groups are alternately arranged along the circumferential direction.

The first voids and the second voids included in the first void group are formed to be continuous to each other and the first voids and the second voids included in the second void group are also formed to be continuous to each other.

Further, an arrangement shape of the first voids and the second voids included in the first void group and an arrangement shape of the first voids and the second voids included in the second void group are preferably set to be point-symmetrical to each other.

In this embodiment, the first elastic part can be more easily formed.

In an embodiment of the present invention, a first cylindrical member is arranged on an outer periphery side of the body and is movable along the axial direction by interlocking with elastic deformation of the first elastic part along the axial direction. For example, the first cylindrical member is arranged on an outer periphery side of the first elastic part so as to be movable along the axial direction, and a pin is inserted into a hole formed in the first cylindrical member and a hole formed in the body at a position on the front end side of the first elastic part.

Further, a second elastic part is provided on the rear end side of the first cylindrical member and is elastically deformable by interlocking with axial movement of the first cylindrical member. For example, a stepped surface is formed at a position on the rear end side of the first elastic part on the body outer peripheral surface, and the second elastic part is provided between the stepped surface of the body outer peripheral surface and a rear end surface of the first cylindrical member. As the second elastic part, for example, an O-ring can be used.

In this aspect, the elastic property (elastic contraction property) of the first elastic part for elastically deforming toward the rear end side along the axial direction can be set higher by the elastic properties of the second elastic part than the elastic property (elastic elongation property) of the first elastic part for elastically deforming toward the front end side along the axial direction. Therefore, for example, stress caused by a difference (feed error) between a pitch of the tap and a machine feed is absorbed by the low elastic elongation property. Further, if the elastic elongation property is high, size reduction of the internal thread may be caused when absorbing a feed error. Furthermore, stress caused when the cutting edge of the tap bites into a workpiece is absorbed by the high elastic contraction property. Further, if the elastic contraction property is low, the machining depth of the tap may become shallow when the cutting edge of the tap bites into a workpiece.

In another embodiment of the present invention, a second cylindrical member is arranged on an inner periphery side of the body and is movable along the axial direction by interlocking with axial movement of a tool (a rear end part of the tool) gripped by the tool gripping part. For example, a position adjusting member which can abut on a rear end surface of the tool gripped by the tool gripping part and the second cylindrical member threadedly engaged with the position adjusting member are arranged on the inner periphery side of the body so as to be movable along the axial direction.

Further, a third elastic part is provided on the rear end side of the second cylindrical member and is elastically deformable by interlocking with axial movement of the second cylindrical member. For example, a stepped surface is formed at a position on the rear end side of the first elastic part on the body inner peripheral surface, and the third elastic part is provided between the stepped surface of the body inner peripheral surface and a rear end surface of the second cylindrical member. As the third elastic part, for example, an O-ring can be used.

The elastic property (elastic contraction property) of the first elastic part for elastically deforming toward the rear end side along the axial direction can be set higher by the elastic property of the third elastic part than the elastic property (elastic elongation property) of the first elastic part for elastically deforming toward the front end side along the axial direction. Therefore, for example, stress caused by a difference (feed error) between a pitch of the tap and a machine feed is absorbed by the low elastic elongation property. Furthermore, stress caused when the cutting edge of the tap bites into a workpiece is absorbed by the high elastic contraction property.

### EFFECT OF THE INVENTION

In the tool holder of the present invention, stress applied to the tool during operation is absorbed with a simple structure.

### BRIEF DESCRIPTION OF THE DRAWINGS

FIG. 1 is a sectional view of a tool holder according to a first embodiment of the present invention.
FIG. 2 is an enlarged view of a part shown by arrow II in FIG. 1.
FIG. 3 shows an elastic part of the tool holder of the first embodiment.
FIG. 4 shows a view from a direction of arrow IV in FIG. 3.
FIG. 5 shows an elastic part of a tool holder of a second embodiment.
FIG. 6 shows an elastic part of a tool holder of a third embodiment.

### MODES FOR CARRYING OUT THE INVENTION

The following detailed description is merely intended to teach a person skilled in the art further details for practicing preferred aspects of the present teachings and is not intended to limit the scope of the invention. Only the claims define the scope of the claimed invention. Therefore, combinations of features and steps disclosed within the following detailed description may not be necessary to practice the invention in the broadest sense, and are instead taught merely to particularly describe some representative examples of the invention, which detailed description will now be given with reference to the accompanying drawings.

An embodiment of a tool holder of the present invention is now described with reference to the drawings.

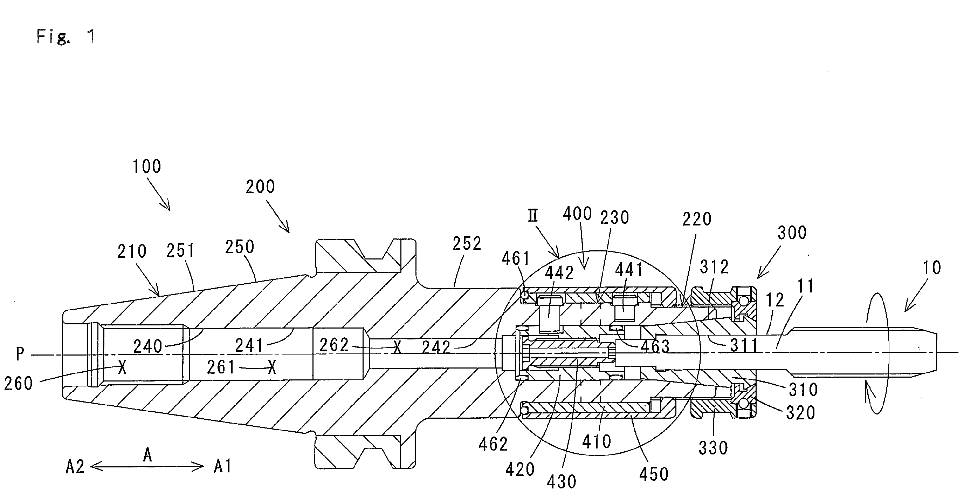

In this specification, an elongating direction (a direction A shown in FIG. 1) of a rotation center line P of a body of the tool holder is defined as an "axial direction". Further, in a section orthogonal to the axial direction, a direction along a circular arc centered on a rotation center (rotation center line P) of the body is defined as a "rotational direction" or a "circumferential direction", and a direction of a line passing through the rotation center of the body is defined as a "radial direction". Moreover, along the axial direction, the side (right side in FIG. 1) where a tool is inserted is defined as a "front end side" and its opposite side (left side in FIG. 1) is defined as a "rear end side".

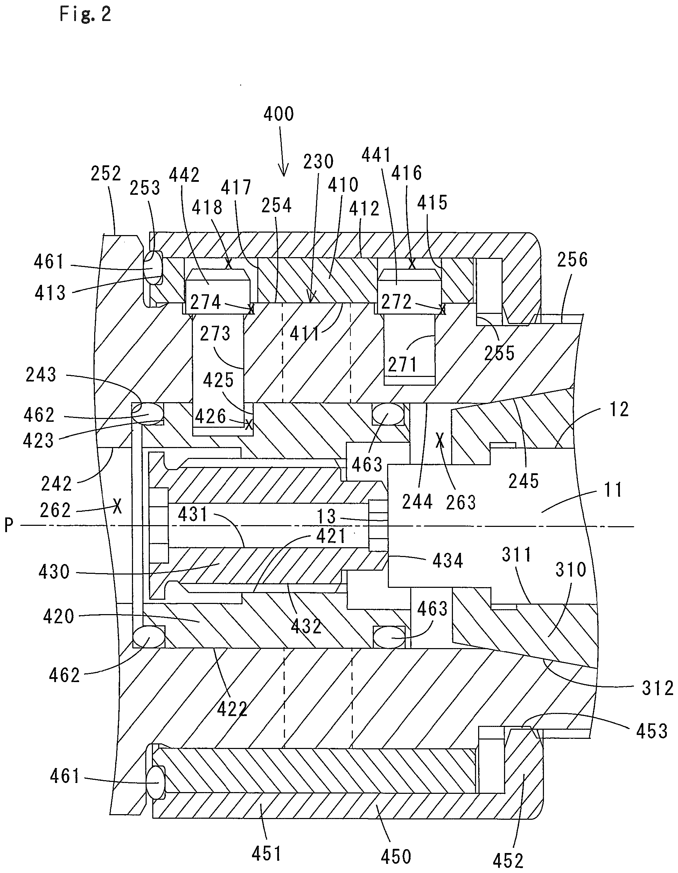

A tool holder 100 of a first embodiment of the present invention is now described with reference to FIGS. 1 and 2. The tool holder 100 of the first embodiment is configured as a tap holder for holding a tap which is used for tapping operation for forming an internal thread in a workpiece. Further, FIG. 1 is a sectional view of the tool holder 100 of the first embodiment, and FIG. 2 is an enlarged view of a part of the tool holder 100 which is shown by arrow II in FIG. 1.

The tool holder 100 of this embodiment has a body 200. In this embodiment, the body 200 is formed of steel.

The body 200 has a cylindrical shape having a body inner peripheral surface 240 and a body outer peripheral surface 250.

The body inner peripheral surface 240 has first to fifth body inner peripheral surface parts 241 to 245. The third body inner peripheral surface part 243 is formed as a stepped surface connecting the second body inner peripheral surface part 242 and the fourth body inner peripheral surface part 244 which have different inner diameters.

The body outer peripheral surface 250 has first to sixth body outer peripheral surface parts 251 to 256. The third body outer peripheral surface part 253 is formed as a stepped surface connecting the second body outer peripheral surface part 252 and the fourth body outer peripheral surface part 254 which have different outer diameters. Further, the fifth body outer peripheral surface part 255 is formed as a stepped surface connecting the fourth body outer peripheral surface part 254 and the sixth body outer peripheral surface part 256 which have different outer diameters.

The body inner peripheral surface 240 defines a body inside space 260. A cooling medium (for example, cooling oil) for cooling a tool 10 which is gripped by a tool gripping part 220 flows through the body inside space 260. The body inside space 260 has a first body inside space part 261 which is defined by the first body inner peripheral surface part 241, a second body inside space part 262 which is defined by the second body inner peripheral surface part 242, and a third body inside space part 263 which is defined by the third to fourth body inner peripheral surface parts 243 to 245. The third body inside space part 263 forms a tool insertion space into which a held part 11 of the tool 10 is inserted.

The body 200 has a shank part 210 on the rear end side and the tool gripping part 220 on the front end side, and has an elastic part 230 between the shank part 210 and the tool gripping part 220.

The tool holder further has a tool gripping mechanism 300 which holds the tool 10 (hereinafter referred to as a "tap 10") in cooperation with the tool gripping part 220 of the body 200.

Moreover, the tool holder has a stress absorbing mechanism 400 which includes the elastic part 230 of the body 200 and absorbs stress which is applied to a cutting edge of the tap 10 during tapping operation or stress which is applied to the tool gripping part 220 holding the tap 10 (stress in the axial direction and stress in the rotational direction).

The elastic part 230 is an example embodiment that corresponds to the "first elastic part" according to the present invention.

The body outer peripheral surface part (the first body outer peripheral surface part 251) corresponding to the shank part 210 is formed in a tapered shape. The first body outer peripheral surface part 251 is gripped by a gripping mechanism provided on a spindle of a machine tool, so that the shank part 210 is coupled to the spindle of the machine tool. Various known gripping mechanisms can be used as a gripping mechanism for gripping the first body outer peripheral surface part 251 (the shank part 210).

The tool gripping part 220 grips the tap 10 in cooperation with the tool gripping mechanism 300.

A spiral cutting edge is formed at a prescribed pitch in a front end region of the tap 10. Further, the held part 11 having a held surface 12 on its outer periphery is provided in the rear end region of the tap 10.

The tool gripping mechanism 300 includes a collet 310, an engagement member 320 and a fastener 330.

The collet 310 is inserted into the third body inside space part 263 which is defined by the body inner peripheral surface part (the fifth body inner peripheral surface part 245) corresponding to the tool gripping part 220. The fifth body inner peripheral surface part 245 and a collet outer peripheral surface 312 have respective tapered surfaces which can be engaged with each other. The engagement member 320 is arranged on an outer periphery of a front end region of the collet 310. Further, a front end region of the fastener 330 is arranged on an outer periphery of the engagement member 320 and a rear end region of the fastener 330 is threadedly engaged with the body outer peripheral surface part (the sixth body outer peripheral surface part 256) corresponding to the tool gripping part 220. The held part 11 of the tap 10 is inserted through a hole formed in the collet 310.

In this state, when the fastener 330 is rotated, the fastener 330, the engagement member 320 and the collet 310 move in a front-rear direction (the axial direction). When the collet 310 moves toward the rear end side, the held surface 12 of the held part 11 of the tap 10 is gripped by engagement between the tapered surface of the fifth body inner peripheral surface part 245 and the tapered surface of the collet outer peripheral surface 312 of the collet 310. Specifically, the tap 10 is gripped by the tool gripping part 220. Further, when the collet 310 moves toward front end side, gripping of the tap 10 is released.

The elastic part 230 is configured to be elastically deformable along the circumferential direction and the axial direction, thereby absorbing stress applied to the cutting edge of the tap 10 in the circumferential direction and the axial direction during tapping operation using the tap 10.

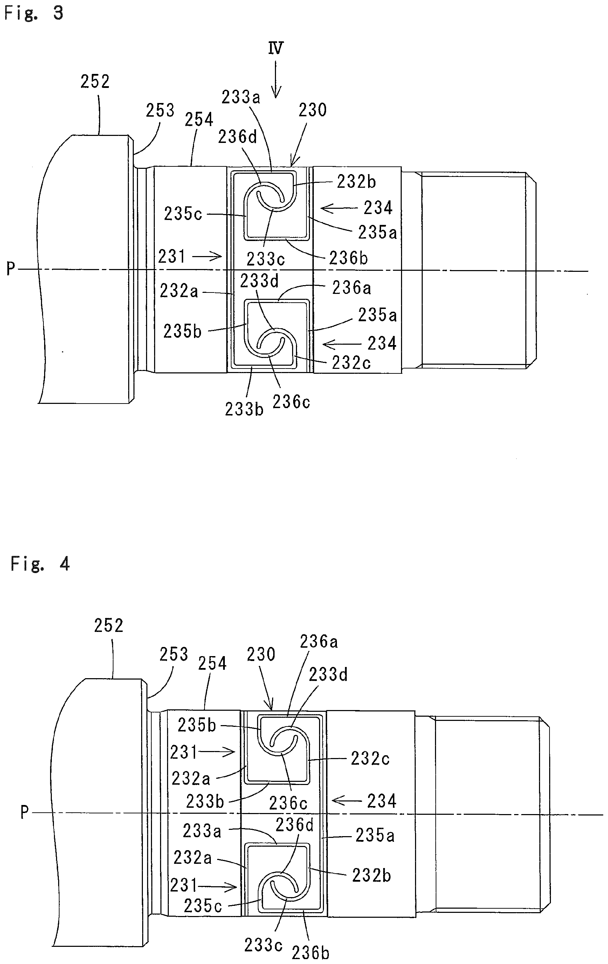

The elastic part 230 of this embodiment is described with reference to FIGS. 3 and 4. FIG. 3 shows the elastic part 230 as viewed from its outer periphery side and FIG. 4 shows the elastic part 230 as viewed from a direction of arrow IV in FIG. 3.

The elastic part 230 has a plurality of voids extending between the body inner peripheral surface part (the fourth body inner peripheral surface part 244) and the body outer peripheral surface part (the fourth body outer peripheral surface part 254) which correspond to the elastic part 230.

The voids formed in the elastic part 230 include a plurality of first voids extending along the circumferential direction and a plurality of second voids extending along the axial direction. A "first void extending along the circumferential direction" includes a void extending substantially along the circumferential direction and a "second void extending along the axial direction" includes a void extending substantially along the axial direction.

A first void extending along the circumferential direction is configured to at least partially overlap with at least one of the other first voids along the circumferential direction. Further, a second void extending along the axial direction is configured to at least partially overlap with at least one of the other second voids along the axial direction.

Further, the plurality of the first voids and the plurality of the second voids are grouped into a plurality of void groups including the first voids and the second voids.

The first voids and the second voids are grouped into first void groups 231 which include first voids 232a to 232c extending along the circumferential direction and second voids 233a to 233d extending along the axial direction, and second void groups 234 which include first voids 235a to 235c extending along the circumferential direction and second voids 236a to 236d extending along the axial direction. In this embodiment, the first voids and the second voids are grouped into two such first void groups 231 and two such second void groups 234.

The voids which extend between the body inner peripheral surface 240 (the fourth body inner peripheral surface part 244) and the body outer peripheral surface 250 (the fourth body outer peripheral surface part 254) are formed, for example, by wire cutting. In order to form a void using the wire-cutting method, a start hole needs to be formed. Specifically, in order to individually form a plurality of voids using the wire-cutting method, the start hole needs to be formed for each void.

In order to make it possible to easily form the first voids and the second voids using the wire-cutting method in a short time, at least one first void and at least one second void are preferably formed to be continuous to each other.

The first voids 232a to 232c and the second voids 233a to 233d included in the first void group 231 are formed to be continuous to each other.

Specifically, the second void 233a extends toward front end side along the axial direction from an end on one side (upper side as viewed in FIG. 3) in the circumferential direction of the first void 232a extending along the circumferentially direction, and the second void 233b extends toward front end side along the axial direction from an end on the other side (lower side as viewed in FIG. 3) in the circumferential direction of the first void 232a. The first void 232b extends to the other side in the circumferential direction along the circumferential direction from a front end of the second void 233a, and the second void 233c extends toward the rear end side along the axial direction from an end on the other side in the circumferential direction of the first void 232b. Further, the first void 232c extends to the one side in the circumferential direction along the circumferential direction from a front end of the second void 233b, and the second void 233d extends toward the rear end side along the axial direction from an end on the one side in the circumferential direction of the first void 232c. In this embodiment, the first voids 232a to 232c and the second voids 233a, 233b have a straight shape, the second void 233c has a curved shape (for example, a circular arc shape) protruding toward the other side in the circumferential direction and the second void 233d has a curved shape (for example, a circular arc shape) protruding toward the one side in the circumferential direction.

Similarly, the first voids 235a to 235c and the second voids 236a to 236d included in the second void group 234 are formed to be continuous to each other.

Specifically, the second void 236a extends toward the rear end side along the axial direction from an end on one side (upper side as viewed in FIG. 4) in the circumferential direction of the void 235a extending along the circumferentially direction, and the second void 236b extends toward the rear end side along the axial direction from an end on the other side (lower side as viewed in FIG. 4) in the circumferential direction of the first void 235a. The first void 235b extends to the other side in the circumferential direction along the circumferential direction from a rear end of the second void 236a, and the second void 236c extends toward the front end side along the axial direction from an end on the other side in the circumferential direction of the first void 235b. Further, the first void 235c extends to the one side in the circumferential direction along the circumferential direction from a rear end of the second void 236b, and the second void 236d extends toward the front end side along the axial direction from an end on the one side in the circumferential direction of the first void 235c. In this embodiment, the first voids 235a to 235c and the second voids 236a, 236b have a straight shape, the second void 236c has a curved shape (for example, the circular arc shape) protruding toward the other side in the circumferential direction and the second void 236d has a curved shape (for example, a circular arc shape) protruding toward the one side in the circumferential direction.

In this embodiment, an arrangement shape along the circumferential direction of the first voids 232a to 232c and the second voids 233a to 233d included in the first void group 231 and an arrangement shape along the circumferential direction of the first voids 235a to 235c and the second voids 236a to 236d included in the second void group 234 are set so as to be point-symmetrical to each other. Specifically, the arrangement shape along the circumferential direction of the voids included in the first void group 231 and the arrangement shape along the circumferential direction of the voids included in the second void group 234 are set so as to match each other if either one is rotated 180 degrees.

Void groups (the first void group 231, the second void group 234) are configured such that each void group at least partially overlaps with at least one of the other void groups along the circumferential direction and the axial direction.

The first void groups 231 and the second void groups 234 are alternately arranged along the circumferential direction, and the first void group 231 and the second void group 234 which are adjacent to each other in the circumferential direction are arranged to partially overlap with each other in the circumferential direction and the axial direction.

Specifically, it is configured such that the second void 233c included in the first void group 231 is arranged between the second voids 236b and 236d included in the second void group 234 which is adjacent to the first void group 231 on the one side in the circumferential direction, and the second void 236c included in the first void group 231 is arranged between the second voids 236a and 236c included in the second void group 234 which is adjacent to the first void group 231 on the other side in the circumferential direction. Further, it is configured such that the second void 236c included in the second void group 234 is arranged between the second voids 233b and 233d included in the first void group 231 which is adjacent to the second void group 234 on the one side in the circumferential direction, and the second void 236d included in the second void group 234 is arranged between the second voids 233a and 233c included in the first void group 231 which is adjacent to the second void group 234 on the other side in the circumferential direction.

When stress is applied to the tap 10 in the axial direction or in the rotational direction during tapping operation for forming an internal thread in a workpiece with the tap 10, stress is also applied to the tool gripping part 220 in the axial direction or in the rotational direction. This stress is also applied to the elastic part 230 connected to the tool gripping part 220. For example, the stress is applied toward the rear end side from the front end side along the axial direction, or the stress is applied in a direction opposite to a direction of rotation of the tap 10 along the rotational direction.

The elastic part 230 is configured to be elastically deformable along the axial direction and the circumferential direction.

Therefore, for example, when stress is applied to the elastic part 230 in a direction A2 along the axial direction, the elastic part 230 elastically deforms (contracts) in the direction A2 along the axial direction. As a result, the stress in the direction A2 along the axial direction is absorbed. When the stress in the direction A2 along the axial direction is reduced, the elastically deformed elastic part 230 returns (elongates) to its original shape.

When stress is applied to the elastic part 230 along the circumferential direction via the tool gripping part 220, the elastic part 230 elastically deforms along the circumferential direction. As a result, the stress along the circumferential direction is absorbed. When the stress along the circumferential direction is reduced, the elastically deformed elastic part 230 returns to its original shape.

Further, when stress is applied to the elastic part 230 in the direction A2 along the axial direction and in the circumferential direction, the elastic part 230 elastically deforms in the direction A2 along the axial direction and also elastically deforms along the circumferential direction (elastically deforms into a twisted shape). As a result, the stress in the direction A2 along the axial direction and the stress along the circumferential direction are absorbed. When the stress in the direction A2 along the axial direction and the stress along the circumferential direction are reduced, the elastically deformed elastic part 230 returns to its original shape.

During tapping operation, stress is applied to the tap by a difference (referred to as a "feed error") between a pitch of the tap and a machine feed or by biting of the cutting edge of the tap into the workpiece. The stress caused by a feed error is absorbed by elastic elongation deformation of the elastic part 230, and the stress caused by biting of the cutting edge of the tap into the workpiece is absorbed by elastic contraction deformation of the elastic part 230.

When the stress caused by a feed error is absorbed by the elastic elongation property of the elastic part 230, size reduction of the internal thread may be caused if the elastic part 230 has high elastic elongation property. Accordingly, the elastic elongation property of the elastic part 230 is preferably set low. Further, when the stress caused by biting of the cutting edge of the tap into the workpiece is absorbed by the elastic contraction property of the elastic part 230, the machining depth may become shallow if the elastic part 230 has a low elastic contraction property. Accordingly, the elastic contraction property of the elastic part 230 is preferably set high.

The high elastic contraction property and the low elastic elongation property cannot be set only by the elastic part 230.

Therefore, in this embodiment, a stress absorbing mechanism 400 is provided which is capable of setting the elastic elongation property appropriate to absorb the stress caused by a feed error and the elastic contraction property appropriate to absorb the stress caused by biting of the cutting edge of the tap into the workpiece, while using the elastic part 230 capable of absorbing stress in the axial direction and the circumferential direction with a simple structure.

The stress absorbing mechanism 400 of this embodiment has the elastic part 230 and a collar 410, a support member 420, a position adjusting member 430 and O-rings 461, 462 for adjusting the elastic properties of the elastic part 230.

The body inner peripheral surface part (the fourth body inner peripheral surface part 244) and the body outer peripheral surface part (the fourth body outer peripheral surface part 254) which correspond to the elastic part 230 and the body outer peripheral surface part (the sixth body outer peripheral surface part 256) which corresponds to the tool gripping part 220 have a circular shape centered on the center of rotation when viewed in a cross section orthogonal to the axial direction.

Further, the body 200 has a hole 272 which is provided at a position on the front end side of the elastic part 230 and defined by a hole wall surface 271 and open to the fourth body outer peripheral surface part 254, and a through hole 274 which is provided at a position on the rear end side of the elastic part 230 and defined by a hole wall surface 273.

The collar 410 has a cylindrical shape having a collar inner peripheral surface 411 and a collar outer peripheral surface 412. The collar inner peripheral surface 411 and the collar outer peripheral surface 412 have a circular shape centered on the center of rotation when viewed in a cross section orthogonal to the axial direction. Further, the collar 410 has a through hole 416 defined by a hole wall surface 415 in its front end region and has a through hole 418 defined by a hole wall surface 417 in its rear end region.

The collar 410 is arranged on the outer periphery side of the fourth body outer peripheral surface part 254. A pin 441 is inserted into the through hole 416 of the collar 410 and the hole 272 of the body 200. Thus, the collar 410 is connected to the body 200 at a position on the front end side of the elastic part 230 by the pin 441. Specifically, the collar 410 can be moved along the fourth body outer peripheral surface part 254 (along the axial direction) when the elastic part 230 elastically deforms along the axial direction (by interlocking with elastic deformation of the elastic part 230 along the axial direction).

If the inner diameter of the through hole 416 is set to be larger than the outer diameter of the pin 441, the timing at which the collar 410 moves along the axial direction by interlocking with elastic deformation of the elastic part 230 along the axial direction can be delayed according to the difference between the inner diameter of the through hole 416 and the outer diameter of the pin 441. Naturally, it can also be configured such that the collar 410 immediately moves along the axial direction by interlocking with elastic deformation of the elastic part 230 along the axial direction.

Further, the O-ring 461 is arranged between the third body outer peripheral surface part (stepped surface) 253 and a rear end surface 413 of the collar 410. The O-ring 461 is formed of, for example, rubber so as to be elastically deformable at least along the axial direction.

Further, a cover 450 is arranged on the outer periphery side of the collar 410. The cover 450 has a bottomed cylindrical shape having a cylindrical part 451 and a bottom 452. A hole is formed in the center of the bottom 452 and defined by a hole wall surface 453. The cover 450 is mounted to the body 200 by threadedly engaging a thread formed in the hole wall surface 453 with a thread formed in the sixth body outer peripheral surface part 256.

The collar 410 is an example embodiment that corresponds to the "first cylindrical member" .

Further, the O-ring 461 is an example embodiment that corresponds to the "second elastic part" .

The support member 420 has a cylindrical shape having a support member inner peripheral surface 421 and a support member outer peripheral surface 422. The support member inner peripheral surface 421 and the support member outer peripheral surface 422 have a circular shape centered on the center of rotation when viewed in a cross section orthogonal to the axial direction. Further, the support member 420 has a hole 426 which is provided at a position in its rear end region and defined by a hole wall surface 425 and open to the support member outer peripheral surface 422,.

The support member 420 is arranged on the inner periphery side of the fourth body inner peripheral surface part 244 (in the third body inside space part 263 defined by the fourth body inner peripheral surface part 244). A pin 442 is inserted into the through hole 418 of the collar 410, the through hole 274 of the body 200 and the hole 426 of the support member 420. The inner diameter of the hole 426 of the support member 420 is set to be larger than the outer diameter of the pin 422. With this structure, the support member 420 can be moved with respect to the pin 442 within a range of difference between the inner diameter of the hole 426 and the outer diameter of the pin 422. When the hole wall surface 425 defining the hole 426 abuts on the pin 442, movement (movement along the axial direction, movement along the circumferential direction) of the support member 420 is blocked.

The through hole 418 of the collar 410 is configured such that movement of the collar 410 along the axial direction is not prevented by abutment between the hole wall surface 417 defining the through hole 418 and an outer peripheral surface of the pin 442.

Further, the O-ring 462 is disposed between the third body inner peripheral surface part (stepped surface) 243 and a rear end surface 423 of the support member 420. The O-ring 462 is formed of, for example, rubber so as to be elastically deformable at least along the axial direction.

An O-ring 463 is further disposed between the fourth body inner peripheral surface part 244 and the support member outer peripheral surface 422.

The O-ring 462 is also disposed between the fourth body inner peripheral surface part 244 and the support member outer peripheral surface 422. By providing the O-rings 462, 463, the cooling medium flowing through the body inside space 260 is prevented from leaking out through the voids formed in the elastic part 230 and the through hole formed in the collar 410.

The position adjusting member 430 has a cylindrical shape having a position adjusting member inner peripheral surface 431 and a position adjusting member outer peripheral surface 432. The position adjusting member inner peripheral surface 431 defines a position adjusting member inside space through which the cooling medium flows.

The position adjusting member 430 is mounted on the inner periphery side of the support member inner peripheral surface 421 by threadedly engaging a thread formed on the support member inner peripheral surface 421 with a thread formed on the position adjusting member outer peripheral surface 432. The position of the position adjusting member 430 can be adjusted along the axial direction with respect to the support member 420 by rotating the position adjusting member 430 so as to adjust the position of the threaded engagement. The position of abutment between the rear end surface 13 of the tap 10 gripped by the tool gripping part 220 and a front end surface 434 of the position adjusting member 430, or the position (protruding length) of the tap 10 along the axial direction is adjusted by adjusting the position of the position adjusting member 430 along the axial direction with respect to the support member 420.

With such a structure, when the tap 10 is moved along the axial direction by stress applied to the tap 10 (by interlocking with axial movement of the rear end surface 13 of the tap 10) while the front end surface 434 of the position adjusting member 430 and the rear end surface 13 of the tap 10 are held in abutment with each other, the position adjusting member 430 and the support member 420 move along the axial direction.

If it is configured such that the front end surface 434 of the position adjusting member 430 and the rear end surface 13 of the tap 10 do not abut on each other, the position adjusting member 430 and the support member 420 do not move along the axial direction even when the tap 10 moves along the axial direction. Specifically, the function of adjusting the elastic contraction property of the elastic part 230 by the O-ring 462 which will be described below is released.

The position adjusting member 430 is an example embodiment that corresponds to the "position adjusting member capable of adjusting a position of the tool along the axial direction" according to the present invention. The support member 420 is an example embodiment that corresponds to the "second cylindrical member".

The O-ring 462 is an example embodiment that corresponds to the "third elastic part".

Operation of the tool holder 100 of this embodiment is now described. In the following description, the front end surface 434 of the position adjusting member 430 is held in abutment with the rear end surface 13 of the tap 10 (or the position of the tap 10 along the axial direction is adjusted by the position adjusting member 430).

The tap 10 is rotated while the held part 11 of the tap 10 is gripped by the tool gripping part 220.

When stress is applied to the tap 10 in the axial direction or the rotational direction during tapping operation for forming an internal thread in a workpiece with the tap 10, stress in the axial direction or the rotational direction is also applied to the tool gripping part 220. This stress is also applied to the elastic part 230 of the stress absorbing mechanism 400 connected to the tool gripping part 220. As a result, the elastic part 230 elastically deforms in the axial direction or the circumferential direction.

When the elastic part 230 elastically deforms toward the rear end side (in the contracting direction) along the axial direction, the collar 410 connected to the body 200 by the pin 441 moves toward the rear end side along the axial direction, immediately or with slight delay, by interlocking with the elastic deformation in the contracting direction.

When the collar 410 moves toward the rear end side along the axial direction, the O-ring 461 disposed on the rear end side of the collar 410 elastically deforms toward the rear end side along the axial direction

By elastic deformation toward the rear end side of the O-ring 461 along the axial direction, the collar 410 is prevented from moving toward the rear end side along the axial direction, and further the elastic part 230 is prevented from elastically deforming toward the rear end side (in the contracting direction) along the axial direction. Specifically, the elastic contraction property of the elastic part 230 is substantially set high by the elastic properties of the O-ring 461.

On the other hand, when the elastic part 230 elastically deforms toward the front end side along the axial direction, elastic deformation of the O-ring 461 has little influence. Specifically, the elastic elongation property of the elastic part 230 remains as it is.

When the tap 10 (the rear end surface 13 of the tap 10) moves toward the rear end side along the axial direction by elastic deformation toward the rear end side of the elastic part 230 along the axial direction, the position adjusting member 430 and the support member 420 threadedly engaged with the position adjusting member 430 also move toward the rear end side along the axial direction. Specifically, the position adjusting member 430 and the support member 420 move toward the rear end side along the axial direction by interlocking with movement toward the rear end side of the tap 10 (tool) along the axial direction.

When the support member 420 moves toward the rear end side along the axial direction, the O-ring 462 elastically deforms toward the rear end side along the axial direction.

By elastic deformation toward the rear end side of the O-ring 462 along the axial direction, the support member 420 and the position adjusting member 430 are prevented from moving toward the rear end side along the axial direction, and further the elastic part 230 is prevented from elastically deforming toward the rear end side (in the contracting direction) along the axial direction. Specifically, the elastic contraction property of the elastic part 230 is substantially set high by the elastic properties of the O-ring 462.

On the other hand, when the elastic part 230 elastically deforms toward the front end side along the axial direction, elastic deformation of the O-ring 462 has little influence. Specifically, the elastic elongation property of the elastic part 230 remains as it is.

Further, when the front end surface 434 of the position adjusting member 430 is not in abutment with the rear end surface 13 of the tap 10, the function of adjusting the elastic contraction property of the elastic part 230 by the O-ring 462 does not work.

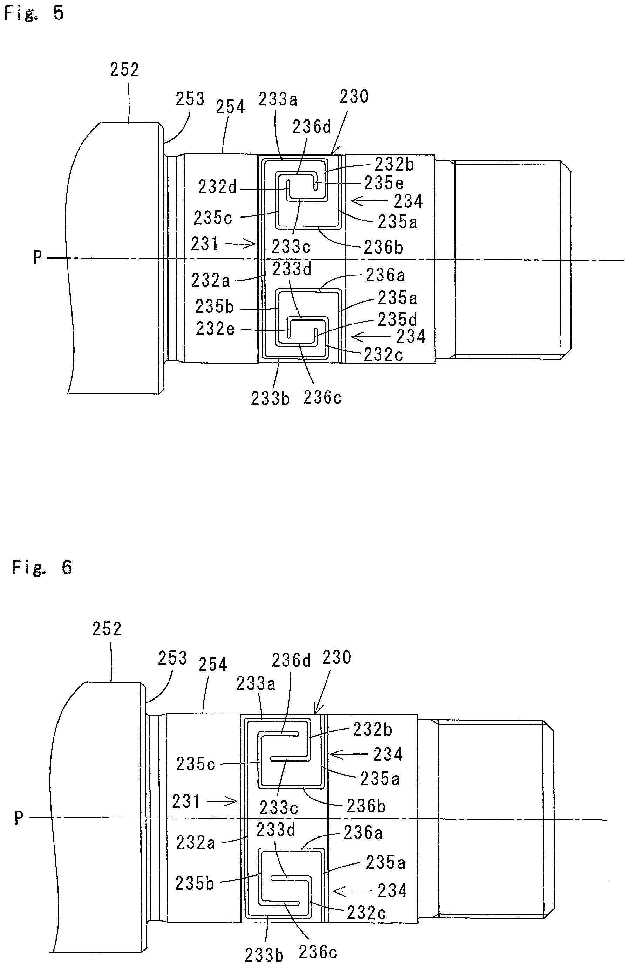

An elastic part 230 of a tool holder of a second embodiment is now described with reference to FIG. 5.

In the elastic part 230 of this embodiment, voids are grouped into first void groups 231 which include first voids 232a to 232e extending along the circumferential direction and second voids 233a to 233d extending along the axial direction, and second void groups 234 which include first voids 235a to 235e extending along the circumferential direction and second voids 236a to 236d extending along the axial direction. Further, like in the first embodiment, voids are grouped into two such first void groups 231 and two such second void groups 234.

Further, the first voids 232a to 232e and the second voids 233a to 233d included in the first void group 231 are formed to be continuous to each other.

Specifically, the second void 233a extends toward the front end side along the axial direction from an end on one side (upper side as viewed in FIG. 5) of the first void 232a extending along the circumferentially direction, and the second void 233b extends toward the front end side along the axial direction from an end on the other side (lower side as viewed in FIG. 5) of the first void 232a. The first void 232b extends to the other side in the circumferential direction along the circumferential direction from an end on the front end side of the second void 233a, the second void 233c extends toward the rear end side along the axial direction from an end on the other side of the first void 232b in the circumferential direction, and the first void 232d extends to the one side in the circumferential direction along the circumferential direction from an end on the rear end side of the second void 233c. Further, the first void 232c extends to the one side in the circumferential direction along the circumferential direction from an end on the front end side of the second void 233b, the second void 233d extends toward the rear end side along the axial direction from an end on the one side of the first void 232c in the circumferential direction, and the first void 232e extends to the other side in the circumferential direction along the circumferential direction from an end on the rear end side of the second void 233d.

Similarly, the first voids 235a to 235e and the second voids 236a to 236d included in the second void group 234 are formed to be continuous to each other.

Specifically, the second void 236a extends toward the rear end side along the axial direction from an end on the one side in the circumferential direction of first void 235a, and the second void 236b extends toward the rear end side along the axial direction from an end on the other side in the circumferential direction of the first void 235a. The first void 235b extends to the other side in the circumferential direction along the circumferential direction from an end on the rear end side of the second void 236a, the second void 236c extends toward the front end side along the axial direction from an end on the other side in the circumferential direction of the first void 235b, and the first void 235d extends to the one side in the circumferential direction along the circumferential direction from an end on the front end side of the second void 236c. Further, the first void 235c extends to the one side in the circumferential direction along the circumferential direction from an end on the rear end side of the second void 236b, the second void 236d extends toward the front end side along the axial direction from an end on the one side in the circumferential direction of the first void 235c, and the first void 235e extends to the other side in the circumferential direction along the circumferential direction from an end on the front end side of the second void 236d.

In this embodiment, the first voids 232a to 232e, 235a to 235e and the second voids 233a to 233d, 236a to 236d have a straight shape.

An arrangement shape along the circumferential direction of the first voids 232a to 232e and the second voids 233a to 233d included in the first void group 231 and an arrangement shape along the circumferential direction of the first voids 235a to 235e and the second voids 236a to 236d included in the second void group 234 are set so as to be point-symmetrical to each other.

Further, void groups are configured such that each void group at least partially overlaps with at least one of the other void groups along the circumferential direction and the axial direction.

The first void groups 231 and the second void groups 234 are alternately arranged along the circumferential direction, and the first void group 231 and the second void group 234 which are adjacent to each other in the circumferential direction are arranged to partially overlap with each other in the circumferential direction and the axial direction.

Specifically, it is configured such that the first void 232d included in the first void group 231 is arranged between the first voids 235c and 235e included in the second void group 234 which is adjacent to the first void group 231 on the one side in the circumferential direction, and the first void 232e included in the first void group 231 is arranged between the first voids 235b and 235d included in the second void group 234 which is adjacent to the first void group 231 on the other side in the circumferential direction. Further, it is configured such that the first void 235d included in the second void group 234 is arranged between the first voids 232c and 232e included in the first void group 231 which is adjacent to the second void group 234 on the one side in the circumferential direction, and the first void 235e included in the second void group 234 is arranged between the first voids 232b and 232d included in the first void group 231 which is adjacent to the second void group 234 on the other side in the circumferential direction.

An elastic part 230 of a tool holder of a third embodiment is now described with reference to FIG. 6.

In the elastic part 230 of this embodiment, voids are grouped into first void groups 231 which include first voids 232a to 232c extending along the circumferential direction and second voids 233a to 233d extending along the axial direction, and second void groups 234 which include first voids 235a to 235c extending along the circumferential direction and second voids 236a to 236d extending along the axial direction. Further, like in the first embodiment, voids are grouped into two such first void groups 231 and two such second void groups 234.

Further, the first voids 232a to 232c and the second voids 233a to 233d included in the first void group 231 are formed to be continuous to each other.

Specifically, the second void 233a extends toward the front end side along the axial direction from an end on one side (upper side as viewed in FIG. 6) in the circumferential direction of the first void 232a extending along the circumferential direction, and the second void 233b extends toward the front end side along the axial direction from an end on the other side (lower side as viewed in FIG. 6) in the circumferential direction of the first void 232a. The first void 232b extends to the other side in the circumferential direction along the circumferential direction from an end on the front end side of the second void 233a, and the second void 233c extends toward the rear end side along the axial direction from an end on the other side in the circumferential direction of the first void 232b. Further, the first void 232c extends to the one side in the circumferential direction along the circumferential direction from an end on the front end side of the second void 233b, and the second void 233d extends toward the rear end side along the axial direction from an end on the one side in the circumferential direction of the first void 232c.

Similarly, the first voids 235a to 235c and the second voids 236a to 236d included in the second void group 234 are formed to be continuous to each other.

Specifically, the second void 236a extends toward the rear end side along the axial direction from an end on the one side in the circumferential direction of the first void 235a extending along the circumferential direction, and the second void 236b extends toward the rear end side along the axial direction from an end on the other side in the circumferential direction of the first void 235a. The first void 235b extends to the other side in the circumferential direction along the circumferential direction from an end on the rear end side of the second void 236a, and the second void 236c extends toward the front end side along the axial direction from an end on the other side in the circumferential direction of the first void 235b. Further, the first void 235c extends to the one side in the circumferential direction along the circumferential direction from an end on the rear end side of the second void 236b, and the second void 236d extends toward the front end side along the axial direction from an end on the one side in the circumferential direction of the first void 235c.

Further, in this embodiment, the first voids 232a to 232c, 235a to 235c and the second voids 233a to 233d, 236a to 236d have a straight shape.

An arrangement shape along the circumferential direction of the first voids 232a to 232c and the second voids 233a to 233d included in the first void group 231 and an arrangement shape along the circumferential direction of the first voids 235a to 235c and the second voids 236a to 236d included in the second void group 234 are set so as to be point-symmetrical to each other.

Further, void groups are configured such that each void group at least partially overlaps with at least one of the other void groups along the circumferential direction and the axial direction.

The first void groups 231 and the second void groups 234 are alternately arranged along the circumferential direction, and the first void group 231 and the second void group 234 which are adjacent to each other in the circumferential direction are arranged to partially overlap with each other in the circumferential direction and the axial direction.

Specifically, it is configured such that the second void 233c included in the first void group 231 is arranged between the second voids 236b and 236d included in the second void group 234 which is adjacent to the first void group 231 on the one side in the circumferential direction, and the second void 233d included in the first void group 231 is arranged between the second voids 236a and 236c included in the second void group 234 which is adjacent to the first void group 231 on the other side in the circumferential direction. Further, it is configured such that the second void 236c included in the second void group 234 is arranged between the second voids 233b and 233d included in the first void group 231 which is adjacent to the second void group 234 on the one side in the circumferential direction, and the second void 236d included in the second void group 234 is arranged between the second voids 233a and 233c included in the first void group 231 which is adjacent to the second void group 234 on the other side in the circumferential direction.

As described above, in the first to third embodiments, the elastic part 230 (first elastic part) having a simple structure absorbs stress which is applied to the tap 10 in the axial direction and the circumferential direction during tapping operation.

Further, the elastic deformation toward the rear end side (elastic contraction property) of the elastic part 230 (first elastic part) along the axial direction is adjusted by the O-ring 461 (second elastic part) which is elastically deformed toward the rear end side along the axial direction by interlocking with the elastic deformation toward the rear end side of the elastic part 230 (first elastic part) along the axial direction, and by the O-ring 462 (third elastic part) which is elastically deformed toward the rear end side along the axial direction by interlocking with the movement toward the rear end side of the tool (the rear end surface of the tool) gripped by the tool gripping part along the axial direction. Specifically, the elastic contraction property and the elastic elongation property of the elastic part 230 (first elastic part) are properly set, so that stress caused by a feed error and stress caused by biting of the cutting edge of the tap into the workpiece are effectively absorbed without lowering the machining accuracy.

The present invention is not limited to the structures of the above-described embodiments , but may be modified within the scope of the appended claims.

The first voids extending along the circumferential direction include voids extending substantially along the circumferential direction, and the second voids extending along the axial direction include voids extending substantially along the axial direction.

The first voids extending along the circumferential direction and the second voids extending along the axial direction are grouped into a plurality of void groups including the first voids and the second voids, and are arranged, group by group, in the first elastic part (elastic part 230).

The numbers, shapes and arrangement positions of the first voids extending along the circumferential direction and the second voids extending along the axial direction may be appropriately changed within a range in which the first elastic part (elastic part 230) can elastically deform along the circumferential direction and the axial direction.

An O-ring is used as the second elastic part which is provided on the rear end side of the first cylindrical member (collar 410) and is elastically deformable by interlocking with axial movement of the first cylindrical member, but various elastic members other than the O-ring may be used as the second elastic part.

An O-ring is used as the third elastic part which is provided on the rear end side of the second cylindrical member (support member 420) and is elastically deformable by interlocking with axial movement of the rear end part of the tool, but various elastic members other than the O-ring may be used as the third elastic part.

The tool holder of the present invention is suitably used to hold a tap for forming an internal thread in a workpiece, but may be used to hold various tools other than the tap.

### Description of Numerals

10: tool
11: held part
12: held surface
13: tool end surface
100: tool holder
200: body
210: shank part
220: tool gripping part
230: elastic part (first elastic part)
231: first void group
232a, 232b, 232c, 232d, 232e: first void
233a, 233b, 233c, 233d: second void
234: second void group
235a, 235b, 235c, 235d, 235e: first void
236a, 236b, 236c, 236d: second void
240: body inner peripheral surface
241 to 245: first to fifth body inner peripheral surface parts
250: body outer peripheral surface
251 to 256: first to sixth body outer peripheral surface parts
260: body inside space
261 to 263: first to third body inside space parts
271: hole wall surface
272: hole
273: hole wall surface
274: through hole
300: tool gripping mechanism
310: collet
320: engagement member
330: fastener
400: stress absorbing mechanism
410: collar (first cylindrical member)
411: collar inner peripheral surface
412: collar outer peripheral surface
413: collar rear end surface
415, 417: hole wall surface
416, 418: through hole
420: support member (second cylindrical member)
421: support member inner peripheral surface
422: support member outer peripheral surface
423: support member rear end surface
425: hole wall surface
426: hole
430: position adjusting member
431: position adjusting member inner peripheral surface
432: position adjusting member outer peripheral surface
434: position adjusting member front end surface
441, 442: pin
450: cover
451: cylindrical part
452: bottom
453: hole wall surface
461: O-ring (second elastic part)
462: O-ring (third elastic part)
463: O-ring

## Claims

1. A tool holder (100), comprising a body (200) that has a body inner peripheral surface and a body outer peripheral surface, the body (200) having a shank part (210) on a rear end side and a tool gripping part (220) on a front end side, wherein
the body (200) has a first elastic part (230) between the shank part (210) and the tool gripping part (220),
the first elastic part (230) has a plurality of first voids (232a, 232b, 232c, 232d, 232e, 235a 235b, 235c, 235d, 235e) extending along a circumferential direction and a plurality of second voids (233a, 233b, 233c, 233d, 236a, 236b, 236c, 236d) extending along an axial direction, the first and second voids extending between the body inner peripheral surface and the body outer peripheral surface, and is configured to be elastically deformable along the axial direction and the circumferential direction,
a first void (232a, 232b, 232c, 232d, 232e, 235a, 235b, 235c, 235d, 235e) of the plurality of first voids extends along the circumferential direction so as to at least partially overlap with at least one of the other first voids (232a, 232b, 232c, 232d, 232e, 235a, 235b, 235c, 235d, 235e) of the plurality of first voids in the circumferential direction, and
a second void (233a, 233b, 233c, 233d, 236a, 236b, 236c, 236d) of the plurality of second voids extends along the axial direction so as to at least partially overlap with at least one of the other second voids (233a, 233b, 233c, 233d, 236a, 236b, 236c, 236d) of the plurality of second voids in the axial direction, wherein
the plurality of first voids (232a, 232b, 232c, 232d, 232e, 235a, 235b, 235c, 235d, 235e) and the plurality of second voids (233a, 233b, 233c, 233d, 236a, 236b, 236c, 236d) are grouped into first void groups (231) including first voids (232a, 232b, 232c, 232d, 232e) and second voids (233a, 233b, 233c, 233d) and second void groups (234) including first voids (235a, 235b, 235c, 235d, 235e) and second voids (236a, 236b, 236c, 236d),
first voids (232a, 232b, 232c, 232d, 232e) and second voids (233a, 233b, 233c, 233d) included in each of the first void groups (231) are continuous to each other and first voids (235a, 235b, 235c, 235d, 235e) and second voids (236a, 236b, 236c, 236d) included in each of the second void groups (234) are continuous to each other,
the first void groups (231) and the second void groups (234) are alternately arranged along the circumferential direction such that a first void group (231) and a second void group (234) which are adjacent to each other in the circumferential direction partially overlap with each other in the circumferential direction and the axial direction.

2. The tool holder (100) as defined in claim 1, wherein
the first void groups (231) and the second void groups (234) include the same number of the first voids (232a, 232b, 232c, 232d, 232e, 235a, 235b, 235c, 235d, 235e) and the second voids (233a, 233b, 233c, 233d, 236a, 236b, 236c, 236d) and are different in arrangement shape of the first voids (232a, 232b, 232c, 232d, 232e, 235a, 235b, 235c, 235d, 235e) and the second voids (233a, 233b, 233c, 233d, 236a, 236b, 236c, 236d).

3. The tool holder (100) as defined in any one of claims 1 or 2, further comprising
a first cylindrical member (410) that is arranged on an outer periphery side of the body (200) and is movable along the axial direction by interlocking with elastic deformation of the first elastic part (230) along the axial direction, and
a second elastic part (461) that is arranged on the rear end side of the first cylindrical member (410) and is formed of an elastic member which is elastically deformable by interlocking with axial movement of the first cylindrical member (410).

4. The tool holder (100) as defined in any one of claims 1 to 3, further comprising
a second cylindrical member (420) that is arranged on an inner periphery side of the body (200) and is movable along the axial direction by interlocking with axial movement of a rear end part of a tool gripped by the tool gripping part (220), and
a third elastic part (462) that is arranged on the rear end side of the second cylindrical member (420) and is formed of an elastic member which is elastically deformable by interlocking with axial movement of the second cylindrical member (420).

## Patentansprüche

1. Werkzeughalter (100), der einen Körper (200) aufweist, der eine Körperinnenumfangsoberfläche und eine Körperaußenumfangsoberfläche aufweist, bei dem der Körper (200) einen Schaftteil (210) an einer hinteren Endseite und einen Werkzeuggreifteil (220) an einer vorderen Endseite aufweist, bei dem
der Körper (200) einen ersten elastischen Teil (230) zwischen dem Schaftteil (210) und dem Werkzeuggreifteil (220) aufweist,
der erste elastische Teil (230) eine Mehrzahl von Hohlräumen (232a, 232b, 232c, 232d, 232e, 235a, 235b, 235c, 235d, 235e), die sich entlang einer Umfangsrichtung erstrecken, und eine Mehrzahl von zweiten Hohlräumen (233a, 233b, 233c, 233d, 236a, 236b, 236c, 236d) aufweist, die sich entlang einer axialen Richtung erstrecken, und die ersten und die zweiten Hohlräume sich zwischen der Körperinnenumfangsoberfläche und der Körperaußenumfangsoberfläche erstrecken und dazu konfiguriert sind, entlang der axialen Richtung und der Umfangsrichtung elastisch verformbar zu sein,
ein erster Hohlraum (232a, 232b, 232c, 232d, 232e, 235a, 235b, 235c, 235d, 235e) der Mehrzahl von ersten Hohlräumen sich entlang der Umfangsrichtung derart erstreckt, dass er zumindest teilweise mit zumindest einem der anderen ersten Hohlräumen (232a, 232b, 232c, 232d, 232e, 235a, 235b, 235c, 235d, 235e) der Mehrzahl von ersten Hohlräumen in der Umfangsrichtung überlappt, und
ein zweiter Hohlraum (233a, 233b, 233c, 233d, 236a, 236b, 236c, 236d) der Mehrzahl von zweiten Hohlräumen sich entlang der axialen Richtung derart erstreckt, dass er mit zumindest einem der anderen zweiten Hohlräumen (233a, 233b, 233c, 233d, 236a, 236b, 236c, 236d) der Mehrzahl von zweiten Hohlräumen in der axialen Richtung überlappt, bei dem
die Mehrzahl von ersten Hohlräumen (232a, 232b, 232c, 232d, 232e, 235a, 235b, 235c, 235d, 235e) und die Mehrzahl von zweiten Hohlräumen (233a, 233b, 233c, 233d, 236a, 236b, 236c, 236d) in erste Hohlraumgruppen (231), die erste Hohlräume (232a, 232b, 232c, 232d, 232e) und zweite Hohlräume (233a, 233b, 233c, 233d) aufweisen, und in zweite Hohlraumgruppen (234) gruppiert sind, die erste Hohlräume (235a, 235b, 235c, 235d, 235e) und zweite Hohlräume (236a, 236b, 236c, 236d) aufweisen,
erste Hohlräume (232a, 232b, 232c, 232d, 232e) und zweite Hohlräume (233a, 233b, 233c, 233d), die in jeder der ersten Hohlraumgruppen (231) enthalten sind, kontinuierlich miteinander sind und erste Hohlräume (235a, 235b, 235c, 235d, 235e) und zweite Hohlräume (236a, 236b, 236c, 236d), die in jeder der zweiten Hohlraumgruppen (234) enthalten sind, kontinuierlich miteinander sind,
die ersten Hohlraumgruppen (231) und zweiten Hohlraumgruppen (234) abwechselnd entlang der Umfangsrichtung angeordnet sind, so dass eine erste Hohlraumgruppe (231) und eine zweite Hohlraumgruppe (234) welche benachbart zueinander in Umfangsrichtung sind, teilweise miteinander in Umfangsrichtung und der axialen Richtung überlappen.

2. Werkzeughalter (100) nach Anspruch 1, bei dem
die ersten Hohlraumgruppen (231) und die zweiten Hohlraumgruppen (234) die gleiche Anzahl von ersten Hohlräumen (232a, 232b, 232c, 232d, 232e, 235a, 235b, 235c, 235d, 235e) und zweiten Hohlräumen (233a, 233b, 233c, 233d, 236a, 236b, 236c, 236d) aufweisen und unterschiedlich in der Anordnungsform der ersten Hohlräume (232a, 232b, 232c, 232d, 232e, 235a, 235b, 235c, 235d, 235e) und der zweiten Hohlräume ( 233a, 233b, 233c, 233d, 236a, 236b, 236c, 236d) sind.

3. Werkzeughalter (100) nach einem der Ansprüche 1 oder 2, ferner mit
einem erstem zylindrischen Bauteil (410), dass einer Außenumfangsseite des Körpers (200) angeordnet ist und entlang der axialen Richtung durch Verzahnen mit der elastischen Verformung des ersten elastischen Teils (230) entlang der axialen Richtung bewegbar ist, und
einem zweiten elastischen Teil (461), der an der hinteren Endseite des ersten zylindrischen Bauteils (410) angeordnet ist und aus einem elastischen Bauteil ausgebildet ist, welches durch Verzahnen mit der axialen Bewegung des ersten zylindrischen Bauteils (410) elastisch verformbar ist.

4. Werkzeughalter (100) nach einem der Ansprüche 1 bis 3, ferner mit
einem zweiten zylindrischen Bauteil (420), das an einer Innenumfangsseite des Körpers (200) angeordnet ist und entlang der axialen Richtung durch Verzahnen mit einer axialen Bewegung eines hinteren Endteils eines Werkzeuges, das durch den Werkzeuggreifteil (220) gegriffen wird, bewegbar ist, und
einem dritten elastischen Teil (462), der an der hinteren Endseite des zweiten zylindrischen Bauteils (420) angeordnet ist und aus einem elastischen Bauteil ausgebildet ist, welches durch Verzahnen mit einer axialen Bewegung des zweiten zylindrischen Bauteils (420) elastisch verformbar ist.

## Revendications

1. Porte-outil (100), comprenant un corps (200) qui a une surface périphérique intérieure de corps et une surface périphérique extérieure de corps, le corps (200) ayant une partie de tige (210) sur un côté d'extrémité arrière et une partie de préhension d'outil (220) sur un côté d'extrémité avant, dans lequel
le corps (200) a une première partie élastique (230) entre la partie de tige (210) et la partie de préhension d'outil (220),
la première partie élastique (230) a une pluralité de premiers vides (232a, 232b, 232c, 232d, 232e, 235a, 235b, 235c, 235d, 235e) s'étendant le long d'une direction circonférentielle et une pluralité de seconds vides (233a, 233b, 233c, 233d, 236a, 236b 236c, 236d) s'étendant le long d'une direction axiale, les premiers et seconds vides s'étendant entre la surface périphérique intérieure de corps et la surface périphérique extérieure de corps, et est configuré pour être élastiquement déformable le long de la direction axiale et de la direction circonférentielle,
un premier vide (232a, 232b, 232c, 232d, 232e, 235a, 235b, 235c, 235d, 235e) de la pluralité de premiers vides s'étend le long de la direction circonférentielle de manière à chevaucher au moins partiellement au moins un des autres premiers vides (232a, 232b, 232c, 232d, 232e, 235a, 235b, 235c, 235d, 235e) de la pluralité de premiers vides dans la direction circonférentielle, et
un second vide (233a, 233b, 233c, 233d, 236a, 236b, 236c, 236d) de la pluralité de seconds vides s'étend le long de la direction axiale de manière à chevaucher au moins partiellement au moins un des autres seconds vides (233a, 233b, 233c, 233d, 236a, 236b, 236c, 236d) de la pluralité de seconds vides dans la direction axiale, dans lequel
la pluralité de premiers vides (232a, 232b, 232c, 232d, 232e, 235a, 235b, 235c, 235d, 235e) et la pluralité de seconds vides (233a, 233b, 233c, 233d, 236a, 236b, 236c, 236d) sont regroupés en premiers groupes de vides (231) comprenant les premiers vides (232a, 232b, 232c, 232d, 232e) et les seconds vides (233a, 233b, 233c, 233d) et les seconds groupes de vides (234) comprenant les premiers vides (235a, 235b, 235c, 235d, 235e) et les seconds vides (236a, 236b, 236c, 236d),
les premiers vides (232a, 232b, 232c, 232d, 232e) et les seconds vides (233a, 233b, 233c, 233d) inclus dans chacun des premiers groupes de vides (231) sont continus entre eux et les premiers vides (235a, 235b, 235c, 235d, 235e) et les seconds vides (236a, 236b, 236c, 236d) inclus dans chacun des seconds groupes de vides (234) sont continus entre eux,
les premiers groupes de vides (231) et les seconds groupes de vides (234) sont disposés alternativement le long de la direction circonférentielle de sorte qu'un premier groupe de vides (231) et un second groupe de vides (234) qui sont adjacents l'un à l'autre dans la direction circonférentielle se chevauchent partiellement l'un l'autre dans la direction circonférentielle et dans la direction axiale.

2. Porte-outil (100) tel que défini dans la revendication 1, dans lequel
les premiers groupes de vides (231) et les seconds groupes de vides (234) comprennent le même nombre de premiers vides (232a, 232b, 232c, 232d, 232e, 235a, 235b, 235c, 235d, 235e) et de seconds vides (233a, 233b, 233c, 233d, 236a, 236b, 236c, 236d) et sont différents dans la forme d'arrangement des premiers vides (232a, 232b, 232c, 232d, 232e, 235a, 235b, 235c, 235d, 235e) et des seconds vides (233a, 233b, 233c, 233d, 236a, 236b, 236c, 236d).

3. Porte-outil (100) tel que défini dans l'une quelconque des revendications 1 ou 2, comprenant en outre
un premier élément cylindrique (410) qui est disposé sur un côté de périphérie extérieure du corps (200) et qui est mobile le long de la direction axiale par emboîtement avec la déformation élastique de la première partie élastique (230) le long de la direction axiale, et
une seconde partie élastique (461) qui est disposée sur le côté d'extrémité arrière du premier élément cylindrique (410) et formée d'un élément élastique déformable par emboîtement avec le mouvement axial du premier élément cylindrique (410).

4. Porte-outil (100) tel que défini dans l'une quelconque des revendications 1 à 3, comprenant en outre
un second élément cylindrique (420) qui est disposé sur un côté de périphérie intérieure du corps (200) et qui est mobile le long de la direction axiale par emboîtement avec un mouvement axial d'une partie d'extrémité arrière d'un outil saisi par la partie de préhension d'outil (220), et
une troisième partie élastique (462) qui est disposée sur le côté d'extrémité arrière du second élément cylindrique (420) et est formée d'un élément élastique déformable par emboîtement avec le mouvement axial du second élément cylindrique (420).
